(19) **Europäisches Patentamt / European Patent Office / Office européen des brevets**

(11) **EP 1 548 494 B1**

(12) **EUROPEAN PATENT SPECIFICATION**

(45) Date of publication and mention
of the grant of the patent:
**08.09.2010 Bulletin 2010/36**

(51) Int Cl.:
**G02F 1/135** (2006.01)   **G02F 1/17** (2006.01)
**G09G 3/02** (2006.01)

(21) Application number: **03798400.2**

(22) Date of filing: **11.09.2003**

(86) International application number:
**PCT/JP2003/011637**

(87) International publication number:
**WO 2004/029708 (08.04.2004 Gazette 2004/15)**

(54) **METHOD AND APPARATUS FOR DRIVING DISPLAY**

VERFAHREN UND VORRICHTUNG ZUR ANSTEUERUNG EINES DISPLAY

PROCEDE ET DISPOSITIF SERVANT A COMMANDER UN ECRAN

(84) Designated Contracting States:
**DE FR GB**

(30) Priority: **26.09.2002   JP 2002280787**

(43) Date of publication of application:
**29.06.2005   Bulletin 2005/26**

(73) Proprietor: **FUJITSU LIMITED**
**Kawasaki-shi,**
**Kanagawa 211-8588 (JP)**

(72) Inventors:
• **NOSE, Masaki**
**Kawasaki-shi,**
**Kanagawa 211-8588 (JP)**

• **TOMITA, Junji**
**Kawasaki-shi,**
**Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(56) References cited:
**JP-A- 4 027 914       JP-A- 11 237 644**
**US-A- 5 712 066       US-A- 6 133 894**
**US-A1- 2002 005 827**

**Description**

[TECHNICAL FIELD]

The present invention relates to a method and apparatus for driving a reflective display device which display images by controlling the electric field strength to be applied to the display layer by using a photoconductive layer.

[BACKGROUND ART]

As display devices for computers and mobile instruments, CRT and transmission-type liquid crystal display having back light are generally used. These display devices are emissive display devices incorporating emission means.

US6,133,894 discloses an optical apparatus including an optical modulation means having a pair of electrodes, and a photoconductor layer and an optical modulation substance layer disposed between the electrodes, a signal light source for supplying light data carrying gradation data to the photoconductor layer, and a readout light illuminator for supplying readout light for reading out picture data to the optical modulation substance layer.

US5,712,066 discloses an image forming method comprising the steps of: forming electric charges on a recording layer by charging the recording medium comprising a conductive substrate and, provided thereon, a photoconductive layer and a recording layer containing a polymeric liquid crystal compound; irradiating, after the step of charging, said recording medium with a light corresponding to an image information to move electric charges to said photoconductive layer; and writing said image information by means of changing a birefringence of the recording layer caused by said movement of electric charges.

However, the recent studies propose that to read displays, such as texts, etc., having high resolution as of printings, non-emission display devices are preferable from the viewpoint of work efficiency and fatigue. The reflective display device requires no emission means incorporated but displays by using natural light, etc. and is soft to the eyes and effective to decrease the electric power consumption. From the viewpoint of further decreasing the electric power consumption, display devices having the memorization ability to retain displayed information even when their source power is turned off are expected.

As reflective display devices having memorization ability, display devices using electrophoresis, twist balls, the selective reflection of cholesteric liquid crystal, or others are proposed.

In the display device using electrophoresis, an electric field is applied to the charged particles in a medium to displace them, whereby displays are made. The display device using electrophoresis is described in, e.g.,

Non-Patent Reference 1 and Non-Patent Reference 2.

In the display device using twist balls, an electric field is applied to charged micro-balls having two colors to rotate them, whereby displays are made. The display device using the twist balls is described in, e.g., Non-Patent Reference 3.

In the display device using cholesteric liquid crystal, displays are made by using the reflection characteristic difference between the planar state and the focalconic state. As examples of the liquid crystal display using cholesteric liquid crystal, Patent Reference 1, Patent Reference 2, Patent Reference 3, Non-Patent Reference 4 and Non-Patent Reference 5, for example, disclose optical writing-type display devices using an optical spatial modulation element. In such display device, electric characteristics of the liquid crystal layer of a light applied region are selectively changed, and the electric characteristics difference between the light applied region and the region where the light is not applied is used to thereby selectively change a state of the liquid crystal layer in the light applied region, whereby images are displayed. The display device using the optical spatial modulation element requires no polarizer and is superior in brightness and visibility.

Patent Reference 4 discloses a display device using a polymer network and chiral nematic liquid crystal, utilizing a bistability having a memorization ability of selective reflection state and transmission (scatter) state, which is equivalent to cholesteric liquid crystal.

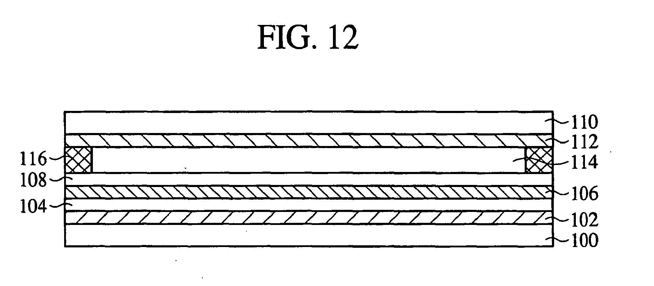

FIG. 12 is a diagrammatic sectional view of an optical writing-type display device using an optical spatial modulation element, which shows the structure thereof.

An electrode 102 is formed on a substrate 100. A photoconductive layer 104 which generates charges by the application of light is formed on the electrode 102. A photo-absorbing layer 106 is formed on the photoconductive layer 104. A partition layer 108 is formed on the photo-absorbing layer 106. A substrate 110 is disposed above the partition layer 108, opposed to the substrate 100. An electrode 112 is formed on the side of the substrate 110 opposed to the substrate 100. A liquid crystal layer 114 of cholesteric liquid crystal is sandwiched between the partition layer 108 and the electrode 112. The liquid crystal layer 114 is sealed with a sealant 116.

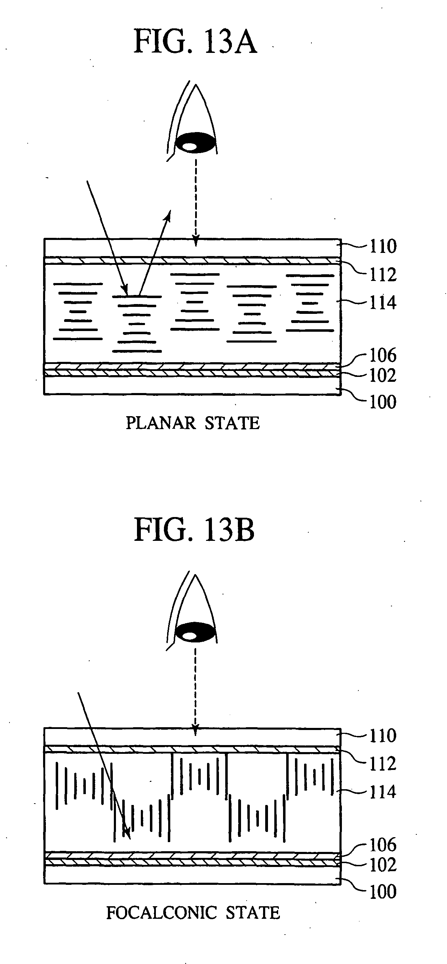

Next, the operational principle of the display device shown in FIG. 12 will be explained with reference to FIG. 13. In FIG. 13, the photoconductive player 104 and the partition layer 108 are omitted.

FIG. 13A shows the planar state of the cholesteric liquid crystal. In the planar state, out of incident light, light of a wavelength corresponding to a helical pitch of the liquid crystal molecules is reflected. Accordingly, in the planar state, a prescribed color corresponding to the wavelength of the reflected light is displayed. A wavelength $\lambda$ for a maximum on a reflection spectrum is expressed by

$$\lambda = n \cdot p$$

wherein an average refractive index is n, and a helical pitch is p. A wavelength band width $\Delta\lambda$ of the reflected light is expressed by

$$\Delta\lambda = \Delta n \cdot p$$

wherein an isotropy of refractive index of liquid crystal is represented by $\Delta n$.

FIG. 13B shows the focalconic state of the cholesteric liquid crystal. In the focalconic state, incident light passes through the liquid crystal layer. When the photo-absorbing layer provided below the liquid crystal layer, the incident light is absorbed by the photo-absorbing layer. Accordingly, black color is displayed in the focalconic state. The planar state and the focalconic state are permanently retained unless a force is applied from the outside. Accordingly, the use of cholesteric liquid crystal makes it possible to form a display device having memorization ability of retaining displayed information even when the source power is turned off.

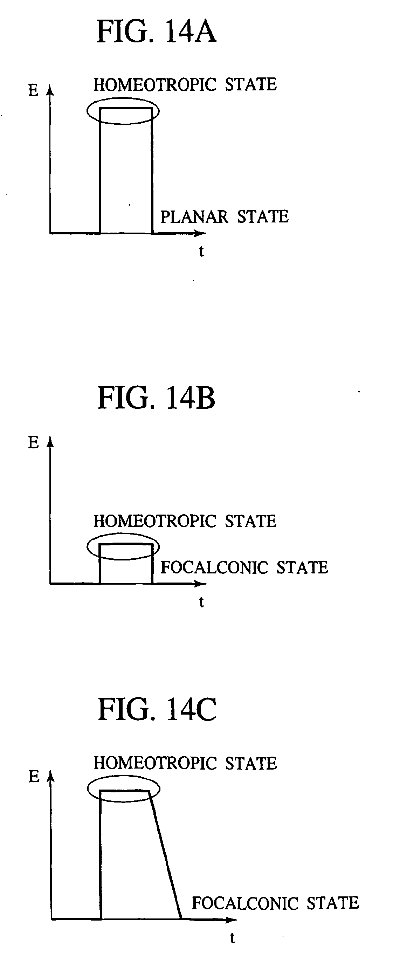

Next, changes of the states of the liquid crystal layer made by the application of an electric field will be explained with reference to FIG. 14. FIG. 14 shows graphs of the relationships between application manners of an electric field and changes of the states. Only the basic relationships between the applied electric field and the liquid crystal layer 114 are shown, but in the actual writing operation, the photoconductive layer 104 is used as will be described later.

When a voltage is applied between the electrode 104 and the electrode 112, and a strong electric field is applied to the liquid crystal layer 114, the helical structure of the liquid crystal molecules are completely untwisted, and the homeotropic state, in which all the molecules are along a direction of the electric field, is made. That is, in the homeotropic state, the longitudinal direction of the liquid crystal molecules are in parallel with the direction of the electric field.

When the electric field is abruptly made zero from the homeotropic state, the helical axes of the liquid crystal molecules are vertical to the electrodes, and the liquid crystal layer has planar state, in which light corresponding to a helical pitch is selectively reflected (FIG. 14A). On the other hand, when a weak electric field which can only untwist the helical axes of the liquid crystal molecules is applied and then removed (FIG. 14B) or when a strong electric field is applied and then gradually removed (FIG. 14C), the helical axes of the liquid crystal molecules become parallel with the electric field, and the liquid crystal layer has the focalconic alignment, in which the incident light is transmitted. In the drive intermediate between the above-described drives, the intermediate state in which the planar state of the liquid crystal and the focalconic state of the liquid crystal are finely mixed. The half tone display can be made.

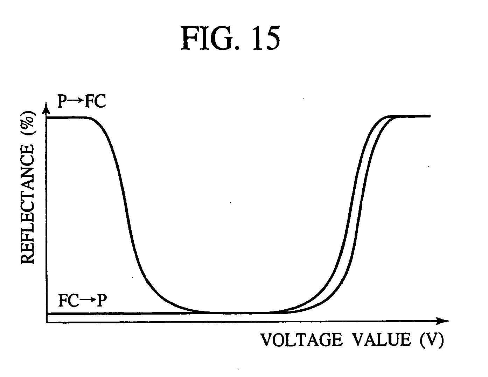

FIG. 15 shows the response characteristics of cholesteric liquid crystal to the pulse voltage.

When the initial state is the planer state (P), the planer state goes on changing to the focalconic state (FC) as a pulse voltage is increased, and as the voltage is further increased, the focalconic state returns again to the planer state (P) via the homeotropic state. When the initial state is the focalconic state (FC), as the pulse voltage is increased, the focalconic state changes to the planer state (P) via the homeotropic state.

As described above, the electric field to be applied between the electrodes 104 and the electrode 112 is suitably controlled, whereby the state of the liquid crystal layer can be arbitrarily changed.

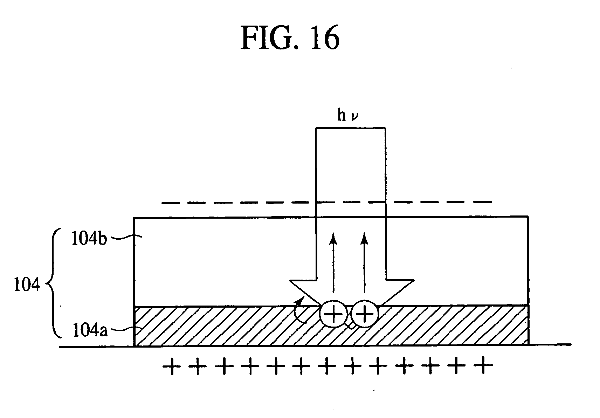

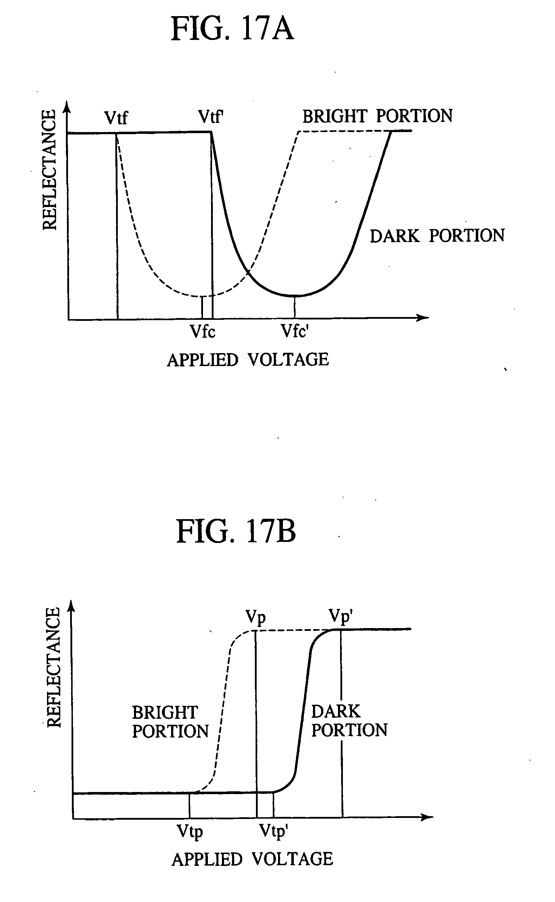

Next, the mechanism of the optical writing using the photoconductive layer will be explained with reference to FIGs. 16 and 17. FIG. 16 is a view explaining the structure and the operation of the photoconductive layer. FIG. 17 is graphs explaining the optical writing method using the photoconductive layer.

FIG. 16 shows a view of an organic photosensitive conductor (OPC) of the so-called function separate-type. The function-separate type OPC comprises a charge generating layer (CGL) 104a for generating charges by light application, and a charge transfer layer (CTL) 104b for transferring charges generated in the charge generating layer 104a, and is generally used in printer devices, etc.

When an optical energy is given to the CGL layer 104a, precursors of charge carriers having charge moments are generated, and the precursors are divided into electrons and holes in the presence of an electric field. The CTL 104b is formed usually of a material which can transport holes and holes are transferred in the CTL layer 104b by the electric field formed by charges on the surface of the OPC. To drive the optical writing element combining cholesteric liquid crystal and this function separate type photoconductive layer 104, the electrode 112 on the side of the reflection layer is the minus electrode, and the electrode 102 on the side of the photoconductive layer 104 is the plus electrode.

The so-called single-layer OPC, in which the generation and the transfer of charges function in one layer differently from the function separate type OPC, is also known.

The photoconductive layer 104 may be formed of an inorganic material, such as amorphous silicon. In comparison with other photosensitive conductors, however, the OPC has many advantages of good durability, good processability and mass-productivity, and being removably mountable on flexible media.

Next, the display (reflectance) characteristics of the display device combining a cholesteric liquid crystal layer 114 and the photoconductive layer 104 will be explained with reference to FIG. 17.

FIG. 17A is a graph comparing the display characteristics in driving from the planer state to the focalconic state between when the light is applied and when the light is not applied.

With light being applied, when a voltage pulse signal exceeds a certain threshold voltage Vtf, the reflection layer goes on changing to the focalconic state. When a voltage at which the reflection layer is sufficiently in the focalconic state is Vfc, the reflection layer goes on changing again to the planar state at a voltage value exceeding the voltage Vfc.

On the other hand, without light being applied, a threshold voltage Vtf' at which the reflection layer starts to change to the focalconic state and a voltage Vfc' at which the reflection layer sufficiently has the focalconic state are much higher than with light being applied.

Here, the respective voltage values in the two sates will be compared. The voltage Vfc at which the reflection layer is sufficiently in the focalconic state with light being applied is lower than the threshold voltage Vtf' without light being applied. That is, the application of the voltage Vfc changes the reflection layer to the focalconic state in the portion with the light applied to, and in the portion without light applied to, the reflection layer remains in the planar state.

FIG. 17B is a graph comparing the display characteristics in driving from the focalconic state to the planar state between with light being applied and without light being applied.

With light being applied, when the applied voltage exceeds Vtp, the liquid crystal goes on changing to the planar state and is perfectly in the planar state at a Vp.

On the other hand, without light being applied, when the applied voltage exceeds Vtp', the liquid crystal goes on changing to the planar state and is perfectly in the planar state at a Vp'.

In comparing the respective voltage values in the two sates, in this case as well, depending on whether or not light is being applied, the threshold voltage largely varies. For example, with the voltage Vp generally applied, the portion with light being applied to changes to the planar state, but the portion without light being applied to remains in the focalconic state.

Thus, due to different conductivities generated in the photoconductive layer after light has been applied, even when the same voltage is applied, the electric field strength given to the liquid crystal differs between the portion with light applied to and the portion without light applied to, which can make the alignment states different.

Usually, alternating waveforms are used to drive the liquid crystal layer. This is because DC drive unevenly distributes ions in the liquid crystal layer, which often causes sticking of characters and images and lowers contrast.

However, the alternating drive cannot be made in the display device using the above-described function separate type OPC, especially in the line exposure (line writing) as of laser printers and LED printers, because the OPC itself has the rectifying function as of diodes.

Even the single layer OPC cannot be expected to make the alternating operation of good symmetry.

From this viewpoint, Patent Reference 5 and Non-Patent Reference 6 disclose the display device which can prevent the rectifying operation of the OPC and achieve the alternating operation of good symmetry by providing the CGL layers on both sides of the CTL layer.

However, due to optical fatigue of the photoconductive layer, printing nonuniformity and contrast decrease often take place under even the same drive conditions. Display device driving method which is not affected by the optical fatigue of the photoconductive layer and has highly stable writing quality has been expected.

One significant problem of the display device using as the substrate a flexible material, such as film is display nonuniformity. That is, the thickness of the display device is influenced by the member of flexible film, etc., and it is not easy to make thickness of the display device perfectly even. Accordingly, the thickness is uneven. The uneven thickness causes electric field strength nonuniformity in the display device, often causing dark characters and light characters in plane.

The display device which can make the alternating drive by the CGL layers arranged on both sides of the CTL layer has high fabrication cost, and it is desirable to make the alternating drive possible by more inexpensive and simple methods.

An object of the present invention is to provide a method for driving a display device which can prevent the display nonuniformity and the contrast decrease due to the optical fatigue of the photoconductive layer and the flexible material used as the substrate. Another object of the present invention is to provide a method for driving a display device which can prevent the sticking of the display layer by a simple structure and method.

Patent Reference 1: Japanese published unexamined patent application No. Hei 09-105900

Patent Reference 2: Japanese published unexamined patent application No. 2000-180888

Patent Reference 3: Japanese published unexamined patent application No. 2002-040386

Patent Reference 4: Japanese published unexamined patent application No. Hei 06-507505

Patent Reference 5: Japanese published unexamined patent application No. Hei 11-237644

Non-Patent Reference 1: Proceedings of the IEEE, U.S.A., July 1973, Vol. 61, No. 7, p. 832

Non-Patent Reference 2: Nature, England, July 1998, Vol. 394, p.253

Non-patent Reference 3: Proceedings of Society for Information Display, U.S.A., Third and Fourth Quarters 1997, Vol. 18/3&4, p. 289

Non-Patent Reference 4: Society for Information Display International Symposium Digest of Technical Papers, U.S.A., 1991, Vol. 22, p. 250-253

Non-Patent Reference 5: Society for Information Display 96 Applications Digest, U.S.A., p. 59
Non-Patent Reference 6: "Electronic Paper Using Cholesteric Liquid crystal and Optical Image Writing by Organic Photosensitive Material", Japan Hardcopy 2000, p. 89
Non-Patent Reference 7: Journal of the Society for Information Display, 1997, Vol. 5/3, p. 269

[DISCLOSURE OF INVENTION]

According to a first aspect of the present invention there is provided a method for driving a display device comprising a reflection element whose display state is changed by an application of an electric field; and a photoconductive layer whose conductivity is changed by an application of light, a drive voltage being applied to the reflection element and the photoconductive layer, and writing light being applied to the photoconductive layer in accordance with image data, whereby the electric field to be applied to the reflection element in a region where the writing light has been applied is changed to write an image in the reflection element, **characterised in that**, before the writing light is applied to the photoconductive layer: the photoconductive layer is charged for a charging period of 1 - 20 seconds; and a drive voltage signal is applied to the reflection element and the photoconductive layer, which drive voltage signal is gradually changed before said charging period, in a continuous manner or in a step by step manner, from a base voltage to the drive voltage.

According to a second aspect of the present invention there is provided an apparatus for driving a display device including a reflection element whose display state is changed by an application of an electric field, and a photoconductive layer whose conductivity is changed by an application of light, which apparatus comprises: a voltage applying means for applying a drive voltage to the reflection element and the photoconductive layer; a light applying means for applying light to the photoconductive layer; a control means for controlling the light applying means and the voltage applying means; and an electronic field applying means for applying the electric field to the reflection element and changing the electric field in a region to which the writing light has been applied to thereby write an image in the reflection element; **characterised in that** the control means are operable, before causing writing light to be applied to the photoconductive layer by the light applying means, to: cause the voltage applying means or the light applying means to charge the photoconductive layer for a charging period of 1 to 20 seconds; and cause the voltage applying means to apply a drive voltage signal to the reflection element and the photoconductive layer, which drive voltage signal gradually changes before said charging period, in a continuous manner or in a step by step manner, from a base voltage to the drive voltage.

According to the present invention, in the display device which performs the optical writing by using a photoconductive layer, a voltage is applied for a prescribed period of time in advance of the light application while the waveform of the applied voltage is smooth, whereby the print concentration can be made stable, and the contrast can be improved.

The optical writing may be performed by the pseudo-AC operation in which the polarity of the applied voltage is changed over for respective prescribed scan area, whereby the nonuniform distribution of the ions in the display layer can be suppressed, and the sticking of characters and pictures can be prevented.

[BRIEF DESCRIPTION OF DRAWINGS]

FIG. 1 is a diagrammatic view showing the optical writing of information in the storage medium using an LED array.

FIG. 2 is a graph showing the state changes of the liquid crystal layer in the optical writing process.

FIG. 3 is a graph showing the change of the resistance value of the OPC in the conventional display device driving method.

FIG. 4 is a graph showing the change of the resistance value of the OPC in the display device driving method according to the present invention.

FIG. 5 is graphs showing the relationships between the waveform of the applied voltage and the voltage in the liquid crystal layer.

FIG. 6 is a diagrammatic sectional view of a display device used in the display device driving method according to a first embodiment of the present invention, which shows the structure thereof.

FIG. 7 is graphs showing the relationships between the charge time and the printing unevenness.

FIG. 8 is graphs showing results of one-dimensionalized intra-plane distributions of the print concentrations.

FIG. 9 is a diagrammatic sectional view of a display device used in the display device driving method according to a second embodiment of the present invention, which shows the structure thereof.

FIG. 10 is a diagrammatic sectional view of a display device showing the display device and the method for driving the same according to a third embodiment of the present invention.

FIG. 11 is diagrammatic views showing the display device driving method according to a fourth embodiment of the present invention.

FIG. 12 is a diagrammatic sectional view showing the structure of an optical writing-type display device using an optical spatial modulation element.

FIG. 13 is views showing the operation principle of the display device using cholesteric liquid crystal.

FIG. 14 is views showing the relationships between manners in which electric fields are applied to the liquid crystal layer and the state changes of the liquid crystal layer.

FIG. 15 is a graph showing the response characteristics of cholesteric liquid crystal to the pulse voltage.

FIG. 16 is a view showing the structure and the operation of the photoconductive layer.

FIG. 17 is graphs showing the optical writing method using the photoconductive layer.

[BEST MODES FOR CARRYING OUT THE INVENTION]

[The Principle of the Present Invention]

The inventors of the present invention have earnest studies of relationship between the light application and the applied voltage and are the first to have found that (1) applying a voltage for a prescribed period of time or longer before light application and (2) a waveform of the voltage, which is not so acute as rectangular waveforms but gradually increases as do e.g., sine waveforms effectively much stabilize the printing concentration and improve the contrast.

The preferable relationships between the light application and the voltage application will be explained by means of a case that information is written in a storage medium by an LED array.

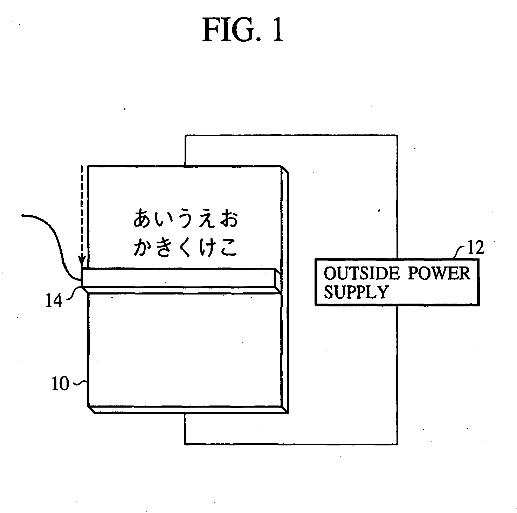

FIG. 1 is a diagrammatic view explaining the method for optical writing information in the storage medium using an LED array. The storage medium 10 including a liquid crystal layer of cholesteric liquid crystal is connected to an outside power supply 12 which applies a voltage between the electrodes opposed to each other with the liquid crystal layer sandwiched therebetween. Above the storage medium 10, an LED head 14 of LEDs arranged in a line for applying light to the storage medium 10 is provided. The emission wavelength range of the LEDs is usually near infrared radiation of not less than 700 nm but is not essentially limited to this. The LED head 14 can scan over the storage medium 10 in a direction perpendicularly to the LED column (in the feeding direction indicated by the arrow in the drawing). The LEDs themselves may operate in the feeding direction, or the storage medium 10 may operate in the feeding direction.

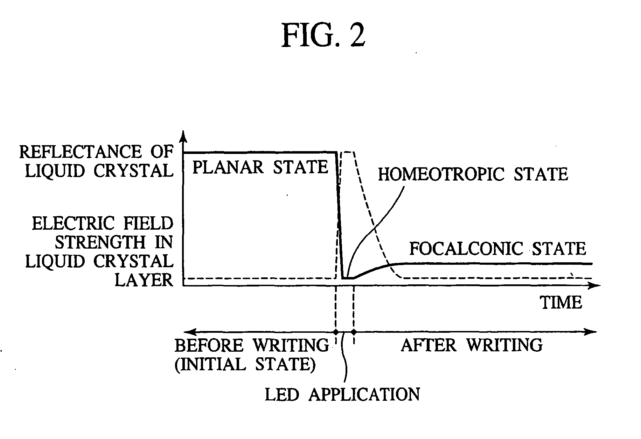

Next, the method of optical writing of information in the storage medium 10 by the optical writing device shown in FIG. 1 will be explained with FIG. 2. FIG. 2 is a graph of the state changes of the liquid crystal layer in the optical writing process.

First, before the LEDs are turned on, a prescribed driving voltage is applied between the electrodes. The voltage is applied here substantially concurrently with turn-on of the LEDs or immediately before the turn-on of the LEDs. This voltage applying method has been used in the conventional driving methods of the display devices.

At this time, the liquid crystal layer has the planar state and is in a highly reflective state. The OPC is a highly resistive state without light applied to. The electric field strength applied to the liquid crystal layer is in a relatively low state.

Next, electric signals indicating image information transmitted via the terminal of a personal computer or others are inputted to the LED head 14 to be converted to optical signals in the LED head 14.

Then, the LED head 14 scans in the feeding direction with the respective elements of the LED head 14 emitting on and off, based on the image information to be recorded.

When light is applied to the liquid crystal layer by LEDs with the voltage applied to, the electric resistance of the OPC is much decreased, and the voltage applied to the liquid crystal layer is increased. Accordingly, because of the increase of the inside electric fields, the apparent threshold voltage is lowered. At this time, the liquid crystal layer becomes the homeotropic state, and the lowered threshold voltage controls the applied voltage value so as to satisfy the voltage value at which the liquid crystal layer changes to the focalconic state. When the LED turns off, the threshold voltage value in this portion returns to the initial value, and the liquid crystal layer in the region where the LED is emitted changes to the focalconic state. That is, optical pulses of the LEDs change the electric field strength in the liquid crystal layer, and the information is recorded.

On the other hand, only a voltage lower than the threshold voltage at which the liquid crystal layer becomes the focalconic state is applied to the region where no light has been applied by LEDs, and the region retains the planar state, which is the initial state.

A string of the above-described operations are repeated while the LED head 14 is caused to scan in the feeding direction, and the information is two-dimensionally recorded in the storage medium 10.

When the light application to all the regions where the information is to be stored is finished, the voltage applied to the liquid crystal layer is turned off. Cholesteric liquid crystal has memorization ability, and after the voltage has been tuned off, the states are retained. Thus, the optical writing in the storage medium 10 is completed.

The above-described optical writing method is explained by means of the simple writing operation. Such simple operation alone causes the fluctuation of charge in the OPC due to optical fatigue of the OPC and peripheral temperature, etc. High degrees of the optical fatigue of the OPC lowers the generation efficiency and mobility of the carriers and makes the generation efficiency and mobility of the carriers unstable, which accordingly leads to the contrast decrease. This is true when the dark current changes due to peripheral temperature changes. The uneven thickness causes the fluctuations of the print concentration, which makes the display reproducibility unstable.

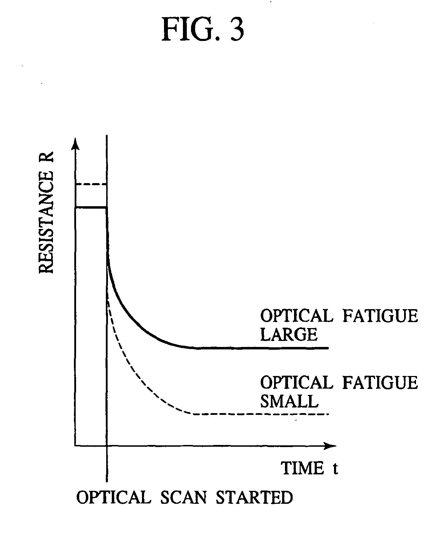

That is, as shown in FIG. 3, when the optical fatigue of the OPC is small, the initial resistance value before the light application is large, and the decrease ratio of the resistance value by the light application is very large. In contrast to this, when the optical fatigue of the OPC is larger, or a peripheral temperature is extremely different from the room temperature, the initial resistance value before the light application decreases by the dark current increase, and the ratio of the resistance value decrease by the light application becomes low. Thus, when the optical fatigue is large, the contrast between the light-applied region and the light-not-applied region becomes lower in comparison with that when the optical fatigue is small.

Based on the above-described result, the inventors of the present application have tried to apply a voltage for a prescribed period of time in advance before the light application and charge up the OPC. Resultantly, even when the optical fatigue of the OPC is large, the decrease of the contrast could be prevented.

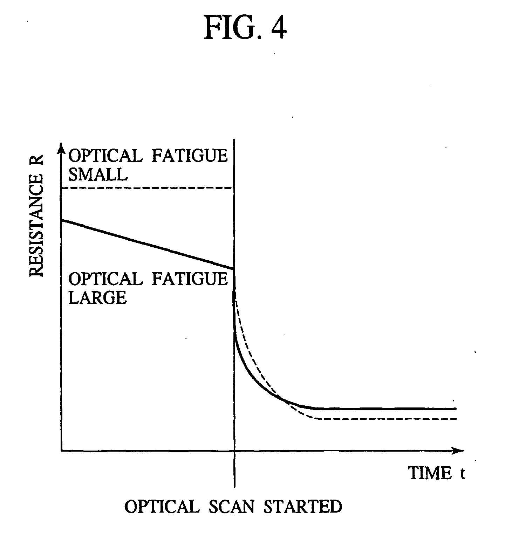

That is, as shown in FIG. 4, in the case that the optical fatigue of the OPC is small, when the driving voltage is applied for a prescribed period of time in advance before the light application, the dark current is substantially constant and low, and the contrast of the resistance value between when the light is not applied and when the light is applied is high. However, in the case that the optical fatigue of the OPC is large, or the temperature is unstable, the generation efficiency and the mobility of the carriers, and the dark current become unstable, and the contrast of the resistance value between when the light is not applied and when the light is applied becomes lower. To improve this, the OPC is charged up to thereby stabilize the carrier generation efficiency and the dark current, and then the light is applied, whereby even when the optical fatigue is large, the resistance value can be lowered to a level where the recording quality is not impaired, i.e., the contrast of the resistance values can be retained.

That is, the charge-up before the light application is equivalent to giving the liquid crystal layer a bias electric field. Electric fields of sufficient strengths can be formed stably in the liquid crystal layer, whereby the unstability of the recording due to peripheral environments, the optical fatigue of the OPC, etc. can be mitigated.

The above-described effect can be obtained by applying feeble auxiliary light. About several lx feeble light having the OPC sensitivity band (mainly visible radiation to infrared radiation) is applied to the entire surface of the storage element, whereby the transfer quantity of the charge in the OPC can be increased, and the recording by the LEDs can be made outstanding, as is increased by the charging-up method. That is, the auxiliary light has the bias effect.

Thus, by using the above-described optical writing sequence, even when the optical fatigue of the OPC is higher, or a peripheral temperature is high, the writing of stably and high contrast can be made. This method can much reduce the fluctuation of the printing concentration due to intra-plane thickness fluctuation.

The period of time of the charge before the light application was 1 - 20 seconds to obtain the proper effect. However, when the charge is made longer, disadvantages of the resolution decrease, etc. do not take place, if outside light noises are shut off and the exposure of the LEDs is made suitable.

When a wide region is continuously scanned by the conventional driving method for applying light substantially concurrently with applying the voltage, a region to be exposed will be formed 1 - 20 seconds after the voltage has been applied. However, in this case, in the region near the exposure start point, the charge is not sufficient, and printed characters are thin, but the region exposed after sufficiently charged, printed characters are dark. That is, the concentration differs between the region exposed at the start of the exposure and the region exposed several seconds later. The drive method according to the present invention can provide a display state having substantially no concentration difference and having stable quality.

To obtain stable contrast, the waveform of the applied voltage is also important in addition to the above-described charge-up.

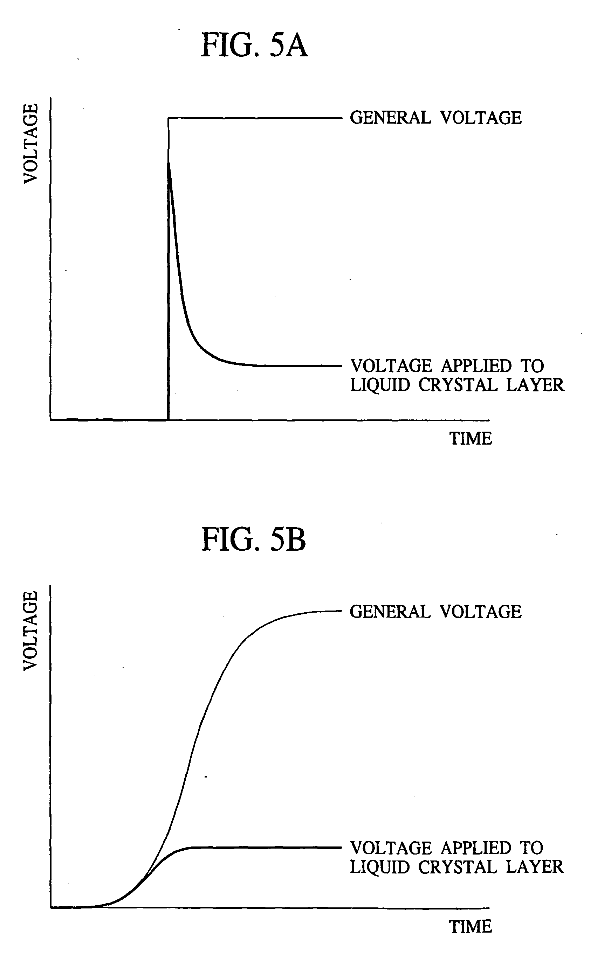

When a voltage having the usual stepped waveform is applied, there takes place a phenomena that, as shown in FIG. 5, the voltage is applied, somewhat overshooting, based on the liquid crystal layer which is equivalent to a CR circuit and differences between the OPC and the liquid crystal layer in the dielectric constant and the resistivity. When such phenomena takes place, the abrupt voltage increase in the transient phenomena process disturbs the states of the liquid crystal molecules, which is a large cause for the contrast decrease.

Based on the above-described result, the inventors of the present application tried to increase the applied voltage gradually from zero. The voltage is gradually applied, whereby the overshooting of the electric field can be reduced, and the alignments of the liquid crystal are less affected. Thus, the contrast decrease can be suppressed.

The waveform of the voltage to be applied can be a waveform which gradually continuously changes as a sine wave, or a waveform which changes intermittently in steps. When a stepped voltage is applied, the step height of the voltage may be a half a printing voltage or less.

What must be noted here is that in this method, wherein an electric field is charged in the DC direction, problems of sticking of characters and pictures, and others may take place. In such case, the reset waveform having electric fields opposite to those of the printing is used, or pseudo-AC operation is made for respective recording blocks, whereby non-uniform distribution of ions can be neutralized.

In the explanation described above, the display device uses cholesteric liquid crystal as the display layer. However, the above-described drive method is applicable to other display devices using photoconductive layers. For example, the driving method according to the present invention is applied to the display devices using twist balls, whereby the rotation accuracy of the balls is improved, and uneven display can be mitigated.

[A First Embodiment]

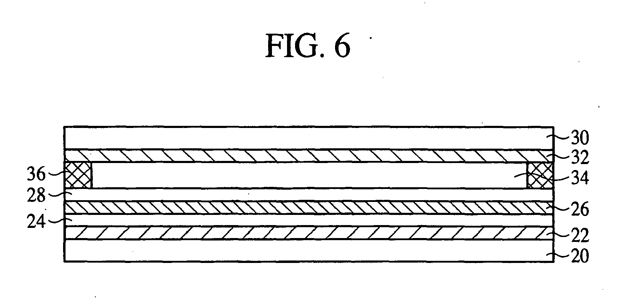

The method for driving the display device according to a first embodiment of the present invention will be explained with reference to FIG. 6. FIG. 6 is a diagrammatic sectional view of a display device used in the method for driving the display device according to the present embodiment, which shows a structure thereof.

First, the structure of the display device used in the method for driving the display device according to the present embodiment will be explained with reference to FIG. 6.

An electrode 22 is formed on a substrate 20. A photoconductive layer 24, which generates charges by the application of light, is formed on the electrode 22. The photoconductive layer 24 is of the 2-layer type as shown in FIG. 16. A photo-absorbing layer 26 is formed on the photoconductive layer 24. A partition layer 28 is formed on the photo-absorbing layer 26. A substrate 30 is disposed above the partition layer 28, opposed to the substrate 30. An electrode 32 is formed on the side of the substrate 30, which is opposed to the substrate 20. A liquid crystal layer 34 of chiral nematic liquid crystal is sandwiched between the partition layer 28 and the electrode 32. The liquid crystal layer 34 is sealed with a sealant 36. The photoconductive layer 24 is preferably of the single layer type rather than the function-separate type, because the current can be alternating.

Then, the method for driving the display device according to the present embodiment will be explained with reference to FIG. 6. The initial state of the liquid crystal is planar state.

First, before the light application, a voltage suitable for the state change of the liquid crystal layer 34 is applied between the electrode 22 and the electrode 32. The waveform of the applied voltage is not stepped but rises gently to a prescribed voltage from a base potential (e.g., the earth potential) in step by step or continuously. For example, sine waves and stair-stepped waveforms are used. The use of such waveforms suppresses the disturbance of the alignments of the liquid crystal molecules by the overshooting of the electric fields and can prevent the contrast decrease.

Then, after the applied voltage has arrives at the prescribed voltage, this state is retained for a prescribed period of time for charge-up. The period of time for charge-up is 1 - 20 seconds. The charge-up suppresses the influence of the optical fatigue of the photoconductive layer 24, and the contrast can be improved as described above. In the present embodiment, the voltage at the time of the charge-up is set the same as the voltage at which the liquid crystal layer is driven but may not be essentially the same.

Then, after the prescribed charge-up period of time has passed, the exposure to the photoconductive layer 24 from the side of the substrate 20 is started. For the exposure, line exposure using an LED array or mask (projection) exposure using a mask can be used. Thus, in a region where the light has been applied, charges are generated in the photoconductive layer 24, a resistance value of the photoconductive layer 24 is decreased, and a voltage applied to the liquid crystal layer 34 becomes higher than a threshold voltage. Thus, the liquid crystal layer 34 has homeotropic state. In a region where the light has not been applied, a voltage applied to the liquid crystal layer 34 does not exceed the threshold voltage, and the liquid crystal layer 34 remains in planar state.

Next, when the light application is stopped, the voltage applied to the liquid crystal layer decreases, and the state of the liquid crystal layer changes to the focalconic state.

Then, the voltage applied between the electrode 22 and the electrode 32 is gently lowered in step by step or continuously to the base potential (e.g., the earth potential). Such waveform is used to lower the voltage for the same reason why such waveform is used to lower the voltage. In the driving in the focalconic state as shown in FIG. 17A, the electric field in the device may not be removed abruptly and may be removed in some time. The writing method for placing the printing unit in the focalconic state does not require to abruptly shut off the electric field, as does the driving to the planar state, and is relatively easy.

In a region to which the light has not been applied in the string of writing operations described above and which remains in the planar state, prescribed images can be additionally written later by the same writing method as described above.

Thus, the operation of the optical writing in the liquid crystal layer 34 is completed.

The above-described sequence can be performed by controlling light source (e.g., an LED head) for applying light to the display device and the voltage of the power supply to be applied between the electrode 22 and the electrode 32 by, e.g., a personal computer.

Next, the result of testing the effect of the method for driving the display device according to the present embodiment will be explained. The liquid crystal layer 34 of the tested display device was a chiral nematic liquid crystal using E48 (from Merck KGaA) as the liquid crystal and CB15 (from Merck KGaA) as a chiral agent which induces right twist, and the thickness was 3 $\mu$m. The photoconductive layer 34 is a two-layer OPC as shown in FIG. 16, and the thickness was 7 $\mu$m. The size of the display medium was B5 size. For the optical writing in the storage medium, an LED array having a 600 dpi resolution was used, and the LED array was caused to scan the storage medium to thereby perform line writing.

(Control)

As a control, writing in the display device was performed by the conventional driving method, wherein the voltage application to the liquid crystal layer is started immediate before the LED exposure.

Immediately before the LED exposure was started, the voltage application to the liquid crystal layer 34 was started. The waveform of the applied voltage was stepped, and 100 V, which is the optimum voltage for writing in the medium, was applied.

Then, the LED exposure to the display medium was started.

After the LED exposure was completed, the image was inspected. For the display of a green background and black characters, the resolution was 600 dpi, and the contrast was about 10. The nonuniformity of the intra-plane character concentration (optical concentration) was about 5%.

(Example)

Before the LED exposure was started, the voltage application to the liquid crystal layer 34 was started. The applied voltage continuously increased from the earth level at a 50 V/second rate. Under this condition, 2 seconds from the start of the voltage application, the applied voltage reached 100 V which is the optimum voltage for writing in the medium. After the applied voltage has arrived at the optimum voltage, the voltage application was set on with the applied voltage kept at the optimum voltage.

Then, 5 seconds after the applied voltage has arrived at the optimum voltage, the LED exposure was started.

After the LED exposure has been completed, the image quality was inspected. For the display of a green background and black characters, the resolution was 600 dpi, and the contrast was increased up to about 20. Especially, the intra-plane nonuniformity of the character concentration could be suppressed down to about 1.2%.

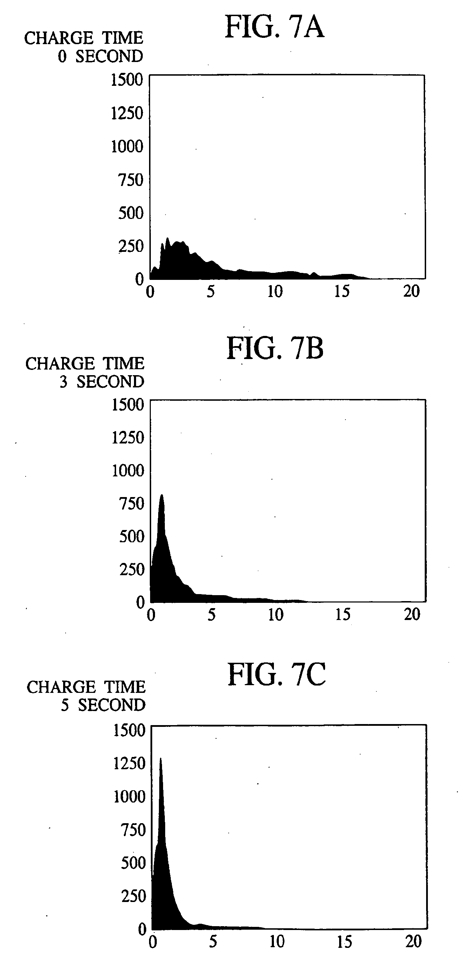

FIG. 7 is graphs of relationships between the charge time and printing unevenness. In FIG. 7A, the charge time was 0 second; in FIG. 7B, the charge time was 3 seconds; and in FIG. 7C, the charge time was 5 seconds. In the respective graphs, brightness was taken on the horizontal axis, and the frequency was taken on the vertical axis.

As shown, it can be seen that when the charge time is 0, the nonuniformity of the brightness is large, and printing unevenness is large. However, it is seen that when the charge time is 3 seconds, the printing unevenness is smaller, and the general print concentration is higher. When the charge time is 5 seconds, the printing unevenness is further smaller, and the print concentration is further higher. Although not shown, when the charge time is below 3 seconds, improvements making the charge effective were found.

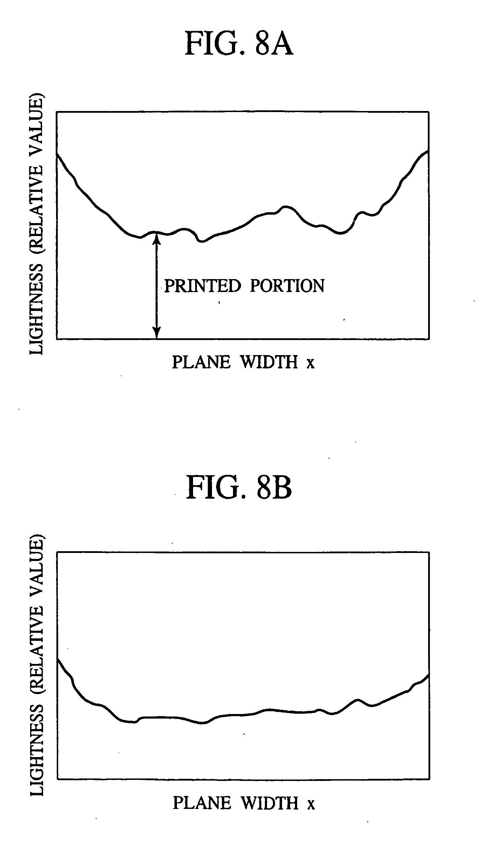

FIG. 8 is graphs of the result of the one-dimensionalized intra-plane distribution of the print concentrations. FIG. 8A shows a control in which the charge was not performed, and FIG. 8B shows an example in which the charge was performed.

As shown, in the Control, the plots are zigzag, and it is seen that the nonuniformity of the print concentration is large. In contrast to this, in the Example, it is seen that the print concentration is higher, and the nonuniformity of the print concentration is decreased.

As described above, according to the present embodiment, in the display device using cholesteric liquid crystal as the recording medium, a voltage is applied for a prescribed period of time or more in advance of the light application while the waveform of the applied voltage is made smooth, whereby the print concentration can be made stable, and the contrast can be improved.

[A Second Embodiment]

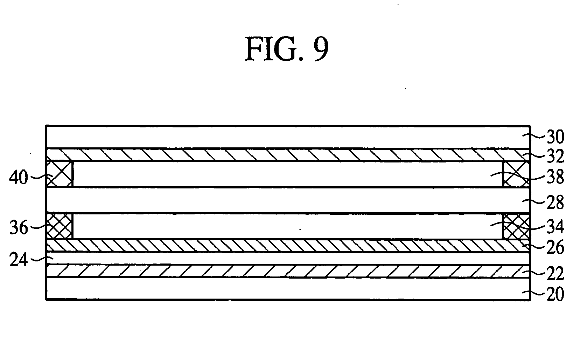

The method for driving the display device according to a second embodiment of the present invention will be explained with reference to FIG. 9.

FIG. 9 is a diagrammatic sectional view of a display device used in the method for driving the display device according to the present embodiment, which shows a structure thereof. The same members of the present embodiment as those of the method for driving the display device according to the first embodiment shown in FIG. 6 will be represented by the same reference numbers not to repeat or to simplify their explanation.

In the present embodiment, the method for driving the display device which uses as the display layer two liquid crystal layers having different selective reflection wavelength bands will be explained.

First, the structure of the display device used in the method for driving the display device according to the present embodiment will be explained with reference to FIG. 9.

An electrode 22 is formed on a substrate 20. A photoconductive layer 24, which generates charges by the application of light, is formed on the electrode 22. A photo-absorbing layer 26 is formed on the photoconductive layer 24. A substrate 30 is provided above the photo-absorbing layer 26, opposed to the substrate 20. An electrode 32 is formed on the side of the substrate 30, which is opposed to the substrate 20. A liquid crystal layer 34 of a chiral nematic liquid crystal and a liquid crystal layer 38 of a chiral nematic liquid crystal are sandwiched between the photo-absorbing layer 26 and the electrode 32 with a partition layer 28 disposed between both liquid crystal layers 34, 38. The liquid crystal layer 34 is sealed with a sealant 36. The liquid crystal layer 38 is sealed with a sealant 40.

Next, the method for driving the display device according to the present embodiment will be explained with reference to FIG. 9. The initial state of the liquid crystal is planar state.

First, before the light application, a voltage suitable for the state change of the liquid crystal layers 34, 38 is applied between the electrode 22 and the electrode 32. The waveform of the applied voltage is not stepped but gently rises to a prescribed voltage in step by step or continuously. For example, sine waves and stair-stepped waveforms are used. The use of such waveforms suppresses the disturbance of the alignments of the liquid crystal molecules by the overshooting of the electric fields and can prevent the contrast decrease.

Then, after the applied voltage has arrives at the prescribed voltage, this state is retained for a prescribed period of time for charge-up. The period of time for charge-up is 1 - 20 seconds. The charge-up suppresses the influence of the optical fatigue of the photoconductive layer 24, and the contrast can be improved as described above.

Then, after the prescribed charge-up period of time has passed, the exposure to the photoconductive layer 24 from the side of the substrate 20 is started. For the exposure, line exposure using an LED array or mask (projection) exposure using a mask can be used. Thus, in a region where the light has been applied, charges are generated in the photoconductive layer 24, a resistance value of the photoconductive layer 24 is decreased, and a voltage applied to the liquid crystal layer 34 becomes higher than a threshold voltage. Thus, the liquid crystal layers 34, 38 have homeotropic state. In a region where the light has not been applied, a voltage applied to the liquid crystal layers 34, 38 does not exceed the threshold voltage, and the liquid crystal layers 34, 38 remain in planar state.

Next, when the light application is stopped, the voltage to be applied to the liquid crystal layers is decreased, and the state of the liquid crystal layers changes to the focalconic state.

Then, the voltage applied between the electrode 22 and the electrode 32 is gently lowered in step by step or continuously to the earth level. Such waveform is used to lower the voltage for the same reason why such waveform is used to increase the voltage.

Thus, the operation of the optical writing in the liquid crystal layer 34, 38 is completed.

Next, the result of testing the effect of method for driving the display device according to the present embodiment will be explained. The liquid crystal layer 34 of the tested display device was a chiral nematic liquid crystal using E48 (from Merck KgaA) as the liquid crystal and CB15 (from Merck KgaA) as a chiral agent which induces right twist, and the thickness was 3 $\mu$m. The liquid crystal layer 34 displays blue color in planar state. The liquid crystal layer 38 of the display device is a chiral nematic liquid crystal using E48 (from Merck KgaA) as the liquid crystal, and CB15 (from Merck KgaA) which induces right twist as the chiral agent, and the thickness was 3 $\mu$m. The liquid crystal layer 38 displays orange color in planar state. When both liquid crystal layers 34, 38 are in the planar state, while color is displayed by additive color mixture. The photoconductive layer 34 is a two-layer OPC as shown in FIG. 16, and the thickness was 20 $\mu$m. The size of the display medium was B5 size. For the optical writing in the storage medium, an LED array having a 600 dpi resolution was used, and the LED array was caused to scan the storage medium to thereby perform line writing.

(Control)

As a control, writing in the display device was performed by the conventional drive method, wherein the voltage application to the liquid crystal layers was started immediate before the LED exposure.

Immediately before the LED exposure was started, the voltage application to the liquid crystal layers 34, 38 was started. The waveform of the applied voltage was stepped, and 400 V, which is the optimum voltage for writing in the medium, was applied.

Then, the LED exposure to the display medium was started.

After the LED exposure was completed, the image was inspected. For the display of a white background and black characters, the resolution was 600 dpi, and the contrast was about 3. The nonuniformity of the intra-plane character concentration (optical concentration) was about 5%.

A part of non-printed portion is changed to the planar state by the overshoot phenomena of the electric field.

(Example)

Before the LED exposure was started, the voltage application to the liquid crystal layers 34, 38 was started. The applied voltage continuously increased from the earth level at a 50 V/second rate. Under this condition, 8 seconds from the start of the voltage application, the applied voltage reached 400 V which is the optimum voltage for the writing in the medium. After the applied voltage has arrived at the optimum voltage, the voltage application was set on with the applied voltage kept at the optimum voltage.

Then, 5 seconds after the applied voltage has arrived at the optimum voltage, the LED exposure was started.

After the LED exposure has been completed, the image quality was inspected. For the display of a white background and black characters, the resolution was 600 dpi, and the contrast was increased up to about 10. Especially, the intra-plane nonuniformity of the character concentration could be suppressed down to about 2 %.

Also in the case that mask exposure (projection exposure) was used in place of the LED array to exposure the storage medium, the liquid crystal layers had the focalconic state in the region where the light was applied and retain the planar state in the region where the light was not applied. Vivid negative records of high contrast could be made. The contrast at this time was about 10.

As described above, according to the present embodiment, in the display device using, as the recording medium, 2 cholesteric liquid crystal layers having different selective reflection wavelength bands, a voltage is applied for a prescribed period of time or more in advance of the light application while the waveform of the applied voltage is smooth, whereby the print concentration can be made stable, and the contrast can be improved.

[A Third Embodiment]

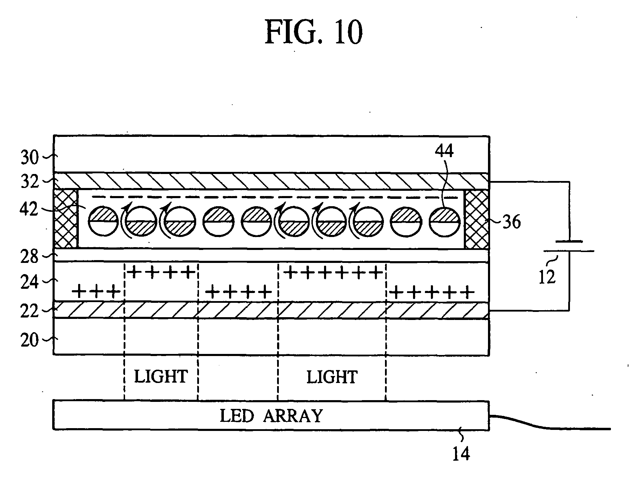

The method for driving the display device according to a third embodiment of the present invention will be explained with reference to FIG. 10.

FIG. 10 is a diagrammatic sectional view of a display device used in the method for driving the display device according to the present embodiment, which shows the display device and the driving method. The same members of the present embodiment as those of the method for driving the display device according to the first and the second embodiments shown in FIGs. 6 and 9 are represented by the same reference numbers not to repeat or to simplify their explanation.

First, the structure of the display device used in the display device drive method according to the present embodiment will be explained with reference to FIG. 10. The display device shown in the present embodiment is a display device including a storage medium using twist balls.

An electrode 22 is formed on a substrate 20. A photoconductive layer 24, which generates charges by the light application, is formed on the electrode 22. On the photoconductive layer 24, a partition layer 28 is formed. Above the partition layer 28, a substrate 30 is formed opposed to the substrate 20. An electrode 32 is formed on the side of the substrate 30, which is opposed to the substrate 20. A display layer 42 including a plurality of twist balls 44 is sandwiched between the partition layer 28 and the electrode 32. The hemispherical surfaces of each twist balls 44 have different colors and charge characteristics, and the twist balls can rotate in the display layer 42 in accordance with applied electric field. The display layer 42 is sealed with a sealant 36.

Next, the method for driving the display device according to the present embodiment will be explained with reference to FIG. 10. The following description is based on the assumption that the state in which the black regions of the twist balls 44 are opposed to the substrate 30 is the initial state. It is also assumed that the black regions of the twist balls 44 are charged negative, and the white regions of the twist balls 44 are charged positive.

Before the light application, a prescribed voltage is applied between the electrode 22 and the electrode 32 from an outside power supply 12. At this time, the waveform of the applied voltage is not stepped but gently rises to the prescribed voltage in step by step or continuously. For example, a sine wave or a stair-stepped waveform can be used.

Next, after the applied voltage has arrives at the prescribed voltage, this state is retained for a prescribed period of time for charge-up. The period of time for charge-up is 1 - 20 seconds. The charge-up depresses the influence of the optical fatigue of the photoconductive layer 24 and can improve the rotation accuracy of the twist balls 44, i.e., the contrast.

Then, after the charge-up period of time has passed, the exposure to the photoconductive layer 24 from the side of the substrate 20 is started. For the exposure, line exposure using an LED array or mask (projection) exposure using a mask can be used. Thus, in a region where the light has been applied, charges are generated in the photoconductive layer 24, a resistance value of the photoconductive layer 24 is decreased, and a voltage applied to the display layer 42 becomes higher than a threshold voltage at which the twist balls 44 rotate. Then, the twist balls 44 are rotated by the charges generated in the photoconductive layer 24 and display prescribed colors. For example, in the example shown in FIG. 10, the white regions of the twist balls 44 charged positive repulse the positive charges generated in the photoconductive layer 24 and rotate to thereby oppose to the substrate 30. In a region where the light has not been applied, the voltage applied to the display layer 42 does not exceed the threshold voltage, and accordingly, the twist balls 44 do not rotate, remaining in the initial state.

Next, when the light application is stopped, the voltage being applied between the electrode 22 and the electrode 32 is gently decreased in step by step or continuously to the earth level.

Thus, the operation of the optical writing in the display layer 42 is completed.

As described above, according to the present embodiment, in the display device using the twist balls as the storage medium, a voltage is applied for a prescribed period of time in advance of the light application while the waveform of the applied voltage is smooth, whereby the print concentration can be made stable, and the contrast can be improved.

[A Fourth Embodiment]

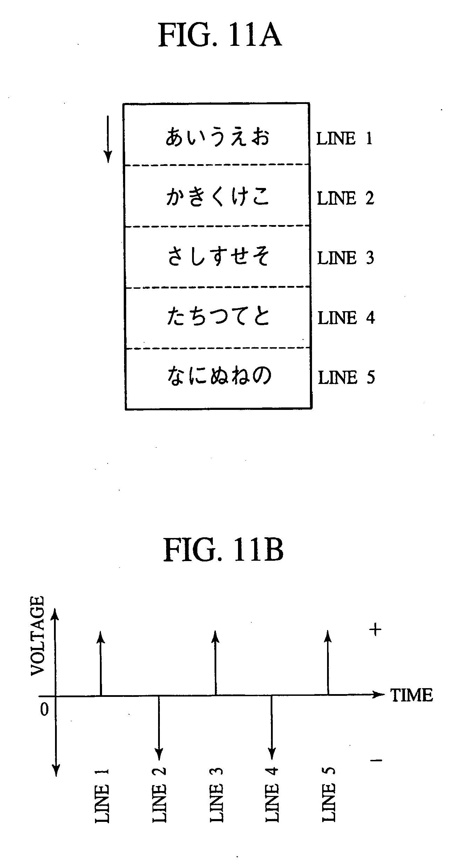

The method for driving the display device according to a fourth embodiment of the present invention will be explained with reference to FIG. 11.

FIG. 11 is diagrammatic views explaining the method for driving the display device according to the present embodiment. The same members of the present embodiment as those of the method for driving the display device according to the first to the third embodiments shown in FIGs. 6, 9 and 10 are represented by the same reference numbers not to repeat or to simplify their explanation.

In the present embodiment, the method for driving the display device, which can prevent the sticking of characters and pictures, will be explained.

The method for driving the display device according to the present embodiment is basically the same as the method for driving the display device according to the first to the third embodiments but is characterized by performing pseudo-AC operation.

The optical writing of the information of Lines 1 to Lines 5 as exemplified in FIG. 11A in the storage medium is assumed here. In optical writing of Lines 1 to Line 5 by the method for driving the display device according to the first embodiment, when the writing is performed with the drive voltage being applied in one direction, the ions in the liquid crystal layer 34 are gradually distributed nonuniformly, and sticking takes place in the worst case.

Then, in the method for driving the display device according to the present embodiment, as exemplified in FIG. 11B, for the odd number liens (Line 1, Line 3, Line 5), the optical writing is performed with the voltage applied in the plus direction, and for the even number lines (Line 2, Line 4), the optical writing is performed with the voltage applied in the minus direction. The writing in the storage medium thus performed is substantially equivalent to the writing with the pseudo-AC operation, and the nonuniform distribution of the ions can be prevented. Accordingly, the sticking of characters and pictures can be prevented.

In the example shown in FIG. 11B, in which the odd number lines are more than the even number lines, the average vector of the applied electric fields upon the optical writing is plus. In such case, the voltage for resetting the state of the liquid crystal layer to the planar state is set opposite to the average vector direction of the applied electric fields upon the optical writing, i.e., at the minus direction, whereby the effect of preventing the nonuniform distribution of the ions can be further improved.

In the case that the direction of the applied electric field upon the optical writing is fixed, the direction of the applied electric field upon the reset may be set opposite.

The method for driving the display device according to the present embodiment uses pseudo-AC operation, and the photoconductive layer 34 must be applicable to the DC driving, e.g., a single type photoconductive layer or a photoconductive layer including CGL layers on both sides of a CTL layer.

As described above, according to the present embodiment, the optical writing is performed by the pseudo-AC operation, in which the polarity of an applied voltage is changed over for each of prescribed scan areas, whereby the nonuniform distribution of the ions in the display layer is suppressed, and the sticking of characters and pictures can be prevented.

The present invention is not limited to the above-described embodiments and can cover other various modifications.

For example, in the first to the third embodiments described above, the drive voltage is applied for a prescribed period of time or more in advance of the light application while the waveform of the applied voltage is smooth. Either of them may be used. The use of both of them is very effective for the improvement, but either of them is also effective to stabilize the print concentration and improve the contrast.

In the first to the third embodiments, the drive voltage is applied before the light application to thereby charge the photoconductive layer. However, in place of applying the drive voltage, feeble light of about several lx having a wavelength of the OPC sensitive band is applied evenly to the entire surface of the storage elements, whereby the transfer quantity of the ions in the OPC may be increased. In this case, the period of time of applying light to the photoconductive layer is 1 - 20 seconds as in applying the voltage, although depending on the intensity of the light. The charge by the light application may be performed with the voltage being applied.

In the second embodiment described above, the present invention is applied to the display device including, as the reflection element, 2 liquid crystal layers having different selective wavelength bands but may be applied to a display device including 3 or more liquid crystal layers.

In the first and the second embodiments, the method for driving the display device according to the present invention is explained by means of the display device using the liquid crystal layers as the reflection element in the first and the second embodiment, and the display device using the twist balls as the reflection element in the third embodiment. The present invention is applicable widely to display devices which make displays by controlling electric fields to be applied to the display layer by using the photoconductive layer. For example, the present invention is applicable to electrophoretic display devices using E-ink (electronic ink) or others.

[INDUSTRIAL APPLICABILITY]

The method for driving the display device according to the present invention is for driving a display device comprising a reflection element whose display state is changed by application of electric fields and a photoconductive layer whose conductivity changes by the application of light, and writing the images in the reflection element by applying a drive voltage to the reflection element and the photoconductive layer and applying selective writing light to the photoconductive layer so that electric fields to be applied to the reflection element in a region where the writing light has been applied are changed. The writing light is applied after the photoconductive layer is charged for a prescribed period of time, whereby stable print concentration and high contrast are realized. Thus, the method for driving the display device according to the present invention is very useful to display devices which display images by controlling the strength of the electric fields to be applied to the display layer by using the photoconductive layer.

**Claims**

1. A method of driving a display device comprising a reflection element (34) whose display state is changed by an application of an electric field; and a photoconductive layer (24) whose conductivity is changed by an application of light, a drive voltage being applied to the reflection element (34) and the photoconductive layer (24), and writing light being applied to the photoconductive layer (24) in accordance with image data, whereby the electric field to be applied to the reflection element (34) in a region where the writing light has been applied is changed to write an image in the reflection element (34), **characterised in that**, before the writing light is applied to the photoconductive layer (24):

   the photoconductive layer (24) is charged for a charging period of 1 - 20 seconds; and
   a drive voltage signal is applied to the reflection element (34) and the photoconductive layer (24), which drive voltage signal is gradually changed before said charging period begins, in a continuous manner or in a step by step manner, from a base voltage to the drive voltage.

2. A method of driving the display device according to claim 1, wherein
   the charging of the photoconductive layer (24) comprises applying the said drive voltage to the reflection element (34) and the photoconductive layer (24) for the charging period.

3. A method of driving the display device according to claim 1 or 2, wherein
   the charging of the photoconductive layer (24) comprises applying a charging light which is weaker than the writing light to the entire surface of the photoconductive layer (24) for the charging period.

4. A method of driving the display device according to any preceding claim, wherein
   after the writing light has been applied to the photoconductive layer (24), the drive voltage signal applied to the reflection element (34) and the photoconductive layer (24) is gradually changed, in a continuous manner or in a step by step manner, from the drive voltage to the base voltage.

5. A method of driving the display device according to any preceding claim, wherein
   the writing light is applied by causing a light source to scan the photoconductive layer (24) in accordance with the image data, and a polarity of the drive voltage is reversed for each prescribed region for the light source to scan.

6. A method of driving the display device according to any preceding claim, wherein
   before or after the writing in the reflection element (34), an erasing voltage is applied to the reflection element (34) to initialize a written information in the reflection element (34).

7. A method of driving the display device according to claim 6, wherein
   a polarity of the drive voltage and a polarity of the erasing voltage are set opposite to each other.

8. A method of driving the display device according to any preceding claim, wherein
   the reflection element (34) is a liquid crystal layer forming a cholesteric phase whose alignment state is changed by an application of an electric field, and the image is written by changing the alignment state from a planar state as an initial state to a focalconic state.

9. A method of driving the display device according to any one of claims 1 to 7, wherein
   the reflection element (34) includes a liquid crystal layer forming a cholesteric phase whose alignment state is changed by an application of an electric field, or includes twist balls which are rotated by an application of an electric field.

10. An apparatus for driving a display device including a reflection element (34) whose display state is changed by an application of an electric field, and a photoconductive layer (24) whose conductivity is changed by an application of light, which apparatus comprises:

    a voltage applying means (22, 32) for applying a drive voltage to the reflection element (34) and the photoconductive layer (24);
    a light applying means for applying light to the photoconductive layer (24);
    a control means for controlling the light applying means and the voltage applying means (22, 32); and
    an electronic field applying means for applying the electric field to the reflection element (34) and changing the electric field in a region to which the writing light has been applied to thereby write an image in the reflection element (34); **characterised in that** the control means are operable, before causing writing light to be applied to the photoconductive layer (24) by the light applying means, to:

    cause the voltage applying means (22, 32) or the light applying means to charge the photoconductive layer (24) for a charging period of 1 to 20 seconds; and
    cause the voltage applying means (22, 32) to apply a drive voltage signal to the reflection element (34) and the photoconductive layer (24), wherein said drive voltage signal is arranged to gradually change before said charging period begins, in a continuous manner or in a step by step manner, from a base voltage to the drive voltage.

11. An apparatus for driving the display device according to claim 10, wherein
the control means are operable to control the light applying means to charge the photoconductive layer (24) by applying a charging light which is weaker than the writing light to the entire surface of the photoconductive layer (24) for the charging period.

**Patentansprüche**

1. Verfahren zum Antreiben einer Anzeigevorrichtung, die ein Reflexionselement (34) umfasst, dessen Anzeigezustand durch Anwendung eines elektrischen Feldes verändert wird; und eine photoleitfähige Schicht (24), deren Leitfähigkeit durch Anwendung von Licht verändert wird, wobei eine Antriebsspannung auf das Reflexionselement (34) und die photoleitfähige Schicht (24) angewendet wird und Schreiblicht auf die photoleitfähige Schicht (24) gemäß Bilddaten angewendet wird, wodurch das elektrische Feld, das auf das Reflexionselement in einer Region anzuwenden ist, wo das Schreiblicht angewendet worden ist, verändert wird, um ein Bild in das Reflexionselement (34) zu schreiben,
**dadurch gekennzeichnet, dass** vor der Anwendung des Schreiblichtes auf die photoleitfähige Schicht (24):

die photoleitfähige Schicht (24) während einer Ladeperiode von 1 - 20 Sekunden geladen wird; und
ein Antriebsspannungssignal auf das Reflexionselement (34) und die photoleitfähige Schicht (24) angewendet wird, welches Antriebsspannungssignal vor Beginn der Ladeperiode auf kontinuierliche Weise oder Schritt für Schritt von einer Basisspannung allmählich in die Antriebsspannung verändert wird.

2. Verfahren zum Antreiben der Anzeigevorrichtung nach Anspruch 1, bei dem
das Laden der photoleitfähigen Schicht (24) das Anwenden der Antriebsspannung auf das Reflexionselement (34) und die photoleitfähige Schicht (24) während der Ladeperiode umfasst.

3. Verfahren zum Antreiben der Anzeigevorrichtung nach Anspruch 1 oder 2, bei dem
das Laden der photoleitfähigen Schicht (24) das Anwenden eines Ladelichtes, das schwächer als das Schreiblicht ist, auf die gesamte Oberfläche der photoleitfähigen Schicht (24) während der Ladeperiode umfasst.

4. Verfahren zum Antreiben der Anzeigevorrichtung nach einem vorhergehenden Anspruch, bei dem nach der Anwendung des Schreiblichtes auf die photoleitfähige Schicht (24) das Antriebsspannungssignal, das auf das Reflexionselement (34) und die photoleitfähige Schicht (24) angewendet wird, auf kontinuierliche Weise oder Schritt für Schritt von der Antriebsspannung allmählich in die Basisspannung verändert wird.

5. Verfahren zum Antreiben der Anzeigevorrichtung nach einem vorhergehenden Anspruch, bei dem das Schreiblicht angewendet wird, indem bewirkt wird, dass eine Lichtquelle die photoleitfähige Schicht (24) gemäß den Bilddaten scant, und eine Polarität der Antriebsspannung bei jeder vorgegebenen Region, die die Lichtquelle zu scannen hat, umgekehrt wird.

6. Verfahren zum Antreiben der Anzeigevorrichtung nach einem vorhergehenden Anspruch, bei dem vor oder nach dem Schreiben in das Reflexionselement. (34) eine Löschspannung auf das Reflexionselement (34) angewendet wird, um in das Reflexionselement (34) geschriebene Informationen zu initialisieren.

7. Verfahren zum Antreiben der Anzeigevorrichtung nach Anspruch 6, bei dem
eine Polarität der Antriebsspannung und eine Polarität der Löschspannung zueinander entgegengesetzt eingestellt sind.

8. Verfahren zum Antreiben der Anzeigevorrichtung nach einem vorhergehenden Anspruch, bei dem das Reflexionselement (34) eine Flüssigkristallschicht ist, die eine cholesterische Phase bildet, deren Ausrichtungszustand durch Anwendung eines elektrischen Feldes verändert wird, und
das Bild durch Verändern des Ausrichtungszustandes von einem planaren zustand als Anfangszustand in einen fokal-konischen Zustand geschrieben wird.

9. Verfahren zum Antreiben der Anzeigevorrichtung nach einem der Ansprüche 1 bis 7, bei dem das Reflexionselcment (34) eine Flüssigkristallschicht enthält, die eine cholesterische Phase bildet, deren Ausrichtungszustand durch Anwendung eines elektrischen Feldes verändert wird, oder Twist-Kugeln enthält, die durch Anwendung eines elektrischen Feldes rotiert werden.

**10.** Vorrichtung zum Antreiben einer Anzeigevorrichtung, die ein Reflexionselement (34) umfasst, dessen Anzeigezustand durch Anwendung eines elektrischen Feldes verändert wird, und eine photoleitfähige Schicht (24), deren Leitfähigkeit durch Anwendung von Licht verändert wird, welche Vorrichtung umfasst:

    ein Spannungsanwendungsmittel (22, 32) zum Anwenden einer Antriebsspannung auf das Reflexionselement (34) und die photoleitfähige Schicht (24);
    ein Lichtanwendungsmittel zum Anwenden von Licht auf die photoleitfähige Schicht (24);
    ein Steuermittel zum Steuern des Lichtanwendungsmittels und des Spannungsanwendungsmittels (22, 32); und
    ein elektronisches Feldanwendungsmittel zum Anwenden des elektrischen Feldes auf das Reflexionselement (34) und Verändern des elektrischen Feldes in einer Region, auf die das Schreiblicht angewendet worden ist, um **dadurch** ein Bild in das Reflexionselement (34) zu schreiben;
    **dadurch gekennzeichnet, dass** das Steuermittel betriebsfähig ist, bevor bewirkt wird, dass Schreiblicht auf die photoleitfähige Schicht (24) durch das Lichtanwendungsmittel angewendet wird, um:

    zu bewirken, dass das Spannungsanwendungsmittel (22, 32) oder das Lichtanwendungsmittel die photoleitfähige Schicht (24) während einer Ladeperiode von 1 bis 20 Sekunden lädt; und
    zu bewirken, dass das Spannungsanwendungsmittel (22, 32) ein Antriebsspannungssignal auf das Reflexionselement (34) und die photoleitfähige Schicht (24) anwendet, wobei das Antriebsspannungssignal vorgesehen ist, um sich vor Beginn der Ladeperiode auf kontinuierliche Weise oder Schritt für Schritt von einer Basisspannung allmählich in die Antriebsspannung zu verändern.

**11.** Vorrichtung zum Antreiben der Anzeigevorrichtung nach Anspruch 10, bei der
das Steuermittel betriebsfähig ist, um das Lichtanwendungsmittel zu steuern, um die photoleitfähige Schicht (24) durch Anwenden eines Ladelichtes, das schwächer als das Schreiblicht ist, auf die gesamte Oberfläche der photoleitfähigen Schicht (24) während der Ladeperiode zu laden.

**Revendications**

**1.** Procédé pour commander un dispositif d'affichage comportant un élément de réflexion (34) dont l'état d'affichage est modifié par l'application d'un champ électrique ; et une couche photoconductrice (24) dont la conductivité est modifiée par l'application d'une lumière, une tension de commande étant appliquée à l'élément de réflexion (34) et à la couche photoconductrice (24), et une lumière d'écriture étant appliquée à la couche photoconductrice (24) conformément à des données d'image, dans lequel le champ électrique à appliquer à l'élément de réflexion (34) dans une région où la lumière d'écriture a été appliquée est modifié pour écrire une image dans l'élément de réflexion (34),
**caractérisé en ce que**, avant que la lumière d'écriture ne soit appliquée à la couche photoconductrice (24) :

    la couche photoconductrice (24) est chargée pendant une période de charge de 1-20 secondes ; et
    un signal de tension de commande est appliqué à l'élément de réflexion (34) et à la couche photoconductrice (24), lequel signal de tension de commande est progressivement modifié avant que ladite période de charge ne commence, de manière continue ou de manière progressive, à partir d'une tension de base à la tension de commande.

**2.** Procédé pour commander le dispositif d'affichage selon la revendication 1, dans lequel
la charge de la couche photoconductrice (24) comporte l'application de ladite tension de commande à l'élément de réflexion (34) et à la couche photoconductrice (24) pendant la période de charge.

**3.** Procédé pour commander le dispositif d'affichage selon la revendication 1 ou 2, dans lequel
la charge de la couche photoconductrice (24) comporte l'application d'une lumière de charge qui est plus faible que la lumière d'écriture sur la surface entière de la couche photoconductrice (24) pendant la période de charge.

**4.** Procédé pour commander le dispositif d'affichage selon l'une quelconque des revendications précédentes, dans lequel
après que la lumière d'écriture a été appliquée à la couche photoconductrice (24), le signal de tension de commande appliqué à l'élément de réflexion (34) et à la couche photoconductrice (24) est progressivement modifié, de manière continue ou de manière progressive, de la tension de commande à la tension de base.

**5.** Procédé pour commander le dispositif d'affichage selon l'une quelconque des revendications précédentes, dans lequel
la lumière d'écriture est appliquée en amenant une source de lumière à balayer la couche photoconductrice (24) conformément aux données d'image, et une polarité de la tension de commande est inversée pour chaque région prescrite pour le balayage de la source lumineuse.

**6.** Procédé pour commander le dispositif d'affichage selon l'une quelconque des revendications précédentes, dans lequel
avant ou après l'écriture dans l'élément de réflexion (34), une tension d'effacement est appliquée à l'élément de réflexion (34) pour initialiser une information écrite dans l'élément de réflexion (34).

**7.** Procédé pour commander le dispositif d'affichage selon la revendication 6, dans lequel
une polarité de la tension de commande et une polarité de la tension d'effacement sont fixées opposées l'une à l'autre.

**8.** Procédé pour commander le dispositif d'affichage selon l'une quelconque des revendications précédentes, dans lequel
l'élément de réflexion (34) est une couche à cristaux liquides formant une phase cholestérique dont l'état d'alignement est modifié par l'application d'un champ électrique, et
l'image est écrite en modifiant l'état d'alignement passant d'un état plan en tant qu'état initial à un état confocal.

**9.** Procédé pour commander le dispositif d'affichage selon l'une quelconque des revendications 1 à 7, dans lequel
l'élément de réflexion (34) comprend une couche à cristaux liquides formant une phase cholestérique dont l'état d'alignement est modifié par l'application d'un champ électrique, ou comprend des billes torsadées qui sont faites tourner lors de l'application d'un champ électrique.

**10.** Appareil pour commander un dispositif d'affichage comprenant un élément de réflexion (34) dont l'état d'affichage est modifié par l'application d'un champ électrique, et une couche photoconductrice (24) dont la conductivité est modifiée par l'application d'une lumière, lequel appareil comporte :

un moyen d'application de tension (22, 32) pour appliquer une tension de commande à l'élément de réflexion (34) et à la couche photoconductrice (24) ;
un moyen d'application de lumière pour appliquer une lumière à la couche photoconductrice (24) ;
un moyen de contrôle pour contrôler le moyen d'application de lumière et le moyen d'application de tension (22, 32) ; et
un moyen d'application de champ électronique pour appliquer le champ électrique à l'élément de réflexion (34) et modifier le champ électrique dans une région à laquelle la lumière d'écriture a été appliquée pour ainsi écrire une image dans l'élément de réflexion (34) ;
**caractérisé en ce que** le moyen de contrôle peut, avant d'amener la lumière d'écriture à être appliquée à la couche photoconductrice (24) par le moyen d'application de lumière :

amener le moyen d'application de tension (22, 32) ou le moyen d'application de lumière à charger la couche photoconductrice (24) pendant une période de charge de 1 à 20 secondes ; et
amener le moyen d'application de tension (22, 32) à appliquer un signal de tension de commande à l'élément de réflexion (34) et à la couche photoconductrice (24), dans lequel ledit signal de tension de commande est agencé pour changer progressivement avant que ladite période de charge ne commence, de manière continue ou de manière progressive, d'une tension de base à la tension de commande.

**11.** Appareil pour commander le dispositif d'affichage selon la revendication 10, dans lequel
le moyen de contrôle peut contrôler le moyen d'application de lumière pour changer la couche photoconductrice (24) en appliquant une lumière de charge qui est plus faible que la lumière d'écriture sur toute la surface de la couche photoconductrice (24) pendant la période de charge.

# FIG. 1

あいうえお
かきくけこ

14

10

OUTSIDE POWER
SUPPLY

12

# FIG. 2

REFLECTANCE OF
LIQUID CRYSTAL

ELECTRIC FIELD
STRENGTH IN
LIQUID CRYSTAL
LAYER

PLANAR STATE

HOMEOTROPIC STATE

FOCALCONIC STATE

TIME

BEFORE WRITING
(INITIAL STATE)

AFTER WRITING

LED APPLICATION

# FIG. 3

OPTICAL FATIGUE LARGE

OPTICAL FATIGUE SMALL

RESISTANCE R

TIME t

OPTICAL SCAN STARTED

# FIG. 4

# FIG. 5A

VOLTAGE

GENERAL VOLTAGE

VOLTAGE APPLIED TO
LIQUID CRYSTAL LAYER

TIME

# FIG. 5B

VOLTAGE

GENERAL VOLTAGE

VOLTAGE APPLIED TO
LIQUID CRYSTAL LAYER

TIME

FIG. 6

FIG. 7A

CHARGE TIME
0 SECOND

FIG. 7B

CHARGE TIME
3 SECOND

FIG. 7C

CHARGE TIME
5 SECOND

# FIG. 8A

LIGHTNESS (RELATIVE VALUE)

PRINTED PORTION

PLANE WIDTH x

# FIG. 8B

LIGHTNESS (RELATIVE VALUE)

PLANE WIDTH x

# FIG. 9

# FIG. 10

# FIG. 11A

| | |
|---|---|
| あいうえお | LINE 1 |
| かきくけこ | LINE 2 |
| さしすせそ | LINE 3 |
| たちつてと | LINE 4 |
| なにぬねの | LINE 5 |

# FIG. 11B

# FIG. 12

# FIG. 13A

PLANAR STATE

# FIG. 13B

FOCALCONIC STATE

# FIG. 14A

E ↑    HOMEOTROPIC STATE

PLANAR STATE

t

# FIG. 14B

E ↑

HOMEOTROPIC STATE

FOCALCONIC STATE

t

# FIG. 14C

HOMEOTROPIC STATE

E ↑

FOCALCONIC STATE

t

# FIG. 15

# FIG. 16

# FIG. 17A

# FIG. 17B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6133894 A
- US 5712066 A
- JP HEI09105900 B
- JP 2000180888 A
- JP 2002040386 A
- JP HEI06507505 B
- JP HEI11237644 B

### Non-patent literature cited in the description

- *Proceedings of the IEEE, U.S.A.,* July 1973, vol. 61 (7), 832
- *Nature, England,* July 1998, vol. 394, 253
- *Proceedings of Society for Information Display, U.S.A.,* 1997, vol. 18/3&4, 289
- *Society for Information Display International Symposium Digest of Technical Papers, U.S.A.,* 1991, vol. 22, 250-253
- *Society for Information Display 96 Applications Digest, U.S.A.,* 59
- Electronic Paper Using Cholesteric Liquid crystal and Optical Image Writing by Organic Photosensitive Material. *Japan Hardcopy,* 2000, 89
- *Journal of the Society for Information Display,* 1997, vol. 5/3, 269